# EUROPEAN PATENT APPLICATION

(11) **EP 4 307 091 A1**
(43) Date of publication of application: **17.01.2024**
(21) Application number: 22778660.5
(22) Date of filing: 22.03.2022
(51) Int. Cl.: G06F 3/023

(54) **INPUT METHOD AND TERMINAL**

(30) Priority: 29.03.2021 CN 202110333972
(71) Applicant: Huawei Technologies Co., Ltd., Shenzhen, Guangdong 518129 (CN)
(72) Inventor: GAO, Lin, Shenzhen, Guangdong 518129 (CN)
(74) Representative: Huawei European IPR
(86) International application number: PCT/CN2022/082221
(87) International publication number: WO 2022/206477

(57) **Abstract**

Embodiments of this application disclose an input method, to improve privacy when a visually-impaired user inputs information. The method in embodiments of this application includes: In response to a first operation on a first character, a terminal broadcasts the first character, but does not input the first character; and in response to a second operation on the first character, the terminal inputs the first character, but does not broadcast the first character, where the second operation is a preset operation corresponding to inputting and not broadcasting.

## Description

This application claims priority to Chinese Patent Application No. 202110333972.2, filed with the China National Intellectual Property Administration on March 29, 2021 and entitled "INPUT METHOD AND TERMINAL", which is incorporated herein by reference in its entirety.

### TECHNICAL FIELD

Embodiments of this application relate to the communication field, and in particular, to an input method and a terminal.

### BACKGROUND

With rapid development of a modern communication system, popularity of intelligent terminals greatly facilitates people's production and life. Currently, most terminals support broadcasting, via a voice, of content displayed on the terminals, to facilitate use of the terminals by visually-impaired users.

In a conventional technology, when the visually-impaired user uses the terminal to input information, the terminal broadcasts, via a voice, content touched by the user in a display area of the terminal. When the visually-impaired user determines that the broadcast content is content to be input, after the user double-clicks the content, the terminal inputs and simultaneously broadcasts the content double-clicked by the user. Because the content input by the visually-impaired user during information inputting is broadcast via a voice, privacy leakage is easily caused when the operation is performed in some public places.

### SUMMARY

Embodiments of this application provide an input method, to improve privacy when a user with impairments inputs information by using a terminal.

A first aspect of embodiments of this application provides an input method. The method includes: In response to a first operation on a first character, a terminal broadcasts the first character, but does not input the first character; and in response to a second operation on the first character, the terminal inputs the first character, but does not broadcast the first character, where the second operation is a preset operation corresponding to inputting and not broadcasting.

In this embodiment of this application, when a visually-impaired user inputs information on the terminal, the visually-impaired user performs linear touch browsing, and a character touched by the visually-impaired user is broadcast via a voice, but is not input. Until the visually-impaired user cancels touching the terminal when the user hears a character that the user expects to input, the character is input, but is not broadcast. It is difficult for another person to identify the character finally input by the visually-impaired user. Therefore, the visually-impaired user knows the character input by the user, and leakage of input information is prevented, to improve privacy when the visually-impaired user performs inputting by using the terminal.

In a possible implementation, the terminal receives the first character by using a soft keyboard, and converts the first character into a first voice by using screen reading software, and the terminal broadcasts the first voice by using the screen reading software, but does not input the first character.

In this embodiment of this application, the terminal may receive, by using a software keyboard, the first character input by a user, and may broadcast, by using the screen reading software, the first character input by the user. This improves implementability of the solution.

In a possible implementation, the first character broadcast but not input by the terminal includes a character that is in a display area of the terminal and that is determined by the user by using the first operation. Specifically, the first character broadcast but not input by the terminal includes a character corresponding to a position touched by the user in the display area of the terminal, or the first character broadcast but not input by the terminal includes a character corresponding to a position to which a mouse points when the user performs an operation by using the mouse.

In a possible implementation, the first character input but not broadcast by the terminal includes a character that is in the display area of the terminal and that is determined by the user by using the second operation. Specifically, the first character input but not broadcast by the terminal includes a character corresponding to a position at which the terminal detects that the user cancels a touch in the display area, where canceling the touch includes that the user lifts a hand to cancel the touch; or the first character input but not broadcast by the terminal includes a character corresponding to a position to which the mouse points when the user operates the mouse to click or lifts the hand to cancel a click.

In this embodiment of this application, there is a plurality of manners for locking or unlocking a character when the user uses the terminal. For example, the user may lock the character by touching a screen without leaving the screen, and unlock the character by lifting the hand to leave the screen; or the user may lock the character by tapping and long pressing the mouse, and unlock the character by lifting the hand to release the mouse. The plurality of manners for locking and unlocking improve the implementability of the solution.

In a possible implementation, the first character may be a letter, a stroke, text, or punctuation. This is not specifically limited.

In a possible implementation, the first character broadcast but not input by the user terminal includes a character determined by the user by operating the terminal by using the first operation, and the first character input but not broadcast by the user terminal includes a character determined by the user by operating the terminal by using the second operation. The first operation includes a linear touch, long pressing the mouse, and the like. The second operation includes lifting the hand to cancel the touch, releasing the mouse, and the like.

A second aspect of embodiments of this application provides a terminal, where the terminal includes a transceiver unit and a processing unit. The processing unit is configured to:
in response to a first operation on a first character, broadcast the first character, but not input the first character.

The processing unit is further configured to: in response to a second operation on the first character, input the first character, but not broadcast the first character, where the second operation is a preset operation corresponding to inputting but not broadcasting.

In a possible implementation, the transceiver unit is specifically configured to receive the first character by using a soft keyboard.

The processing unit is specifically configured to: convert the first character into a first voice by using screen reading software, and broadcast the first voice by using the screen reading software, but not input the first character.

In a possible implementation, the first character broadcast but not input by the terminal includes a character that is in a display area of the terminal and that is determined by a user by using the first operation. Specifically, the first character broadcast but not input by the terminal includes a character corresponding to a position touched by the user in the display area of the terminal, or the first character broadcast but not input by the terminal includes a character corresponding to a position to which a mouse points when the user performs an operation by using the mouse.

In a possible implementation, the first character input but not broadcast by the terminal includes a character that is in the display area of the terminal and that is determined by the user by using the second operation. Specifically, the first character input but not broadcast by the terminal includes a character corresponding to a position at which the terminal detects that the user cancels a touch in the display area; or the first character input but not broadcast by the terminal includes a character corresponding to a position to which the mouse points when the user operates the mouse to click or lifts a hand to cancel a click.

In a possible implementation, canceling the touch includes that the user lifts the hand to cancel the touch.

In a possible implementation, the first character may be a letter, a stroke, text, or punctuation. This is not specifically limited.

A third aspect of embodiments of this application provides a terminal, including a processor, a memory, a display, and a bus. The memory is a transient storage memory or a persistent storage memory. The processor is configured to communicate with the memory, and execute an instruction operation in the memory on the terminal, to perform the method according to any one of the first aspect and the possible implementations of the first aspect.

A fourth aspect of embodiments of this application provides a computer-readable storage medium, including instructions. When the instructions are run on a computer, the computer is enabled to perform the method according to any one of the first aspect and the possible implementations of the first aspect.

A fifth aspect of embodiments of this application provides a computer program product. When the computer program product runs on a computer, the computer is enabled to perform the method according to any one of the first aspect and the possible implementations of the first aspect.

### BRIEF DESCRIPTION OF DRAWINGS

FIG. 1 is a schematic diagram of a system architecture of a terminal according to an embodiment of this application;
FIG. 2 is a schematic diagram of an application scenario of an input method according to an embodiment of this application;
FIG. 3 is a schematic flowchart of an input method according to an embodiment of this application;
FIG. 4 is a schematic diagram of a scenario of an input method according to an embodiment of this application;
FIG. 5 is a schematic diagram of another scenario of an input method according to an embodiment of this application;
FIG. 6 is a schematic diagram of a structure of a terminal according to an embodiment of this application; and
FIG. 7 is a schematic diagram of a structure of a terminal according to an embodiment of this application.

### DESCRIPTION OF EMBODIMENTS

Embodiments of this application provide an input method, to improve privacy when a visually-impaired user inputs information by using a terminal. The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and the like (if existent) are intended to distinguish between similar objects, but do not necessarily indicate a specific order or sequence. It should be understood that data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

In the following, some terms in this application are described, to help a person skilled in the art have a better understanding.

A terminal, also referred to as user equipment (user equipment, UE), is a device providing voice and/or data connectivity for a user, for example, a handheld device or a vehicle-mounted device having a wireless connection function. Currently, some examples of the terminal include a mobile phone, a tablet computer, a notebook computer, a palmtop computer, a mobile Internet device (mobile Internet device, MID), and a wearable device. The wearable device is, for example, virtual reality VR glasses, a smart watch, a smart band, or a pedometer.

A visually-impaired user is a user with visual impairments, and the visually-impaired user includes a user who cannot see completely or a user who cannot see partially, that is, a user with a poor sight. The visually-impaired user cannot clearly view information such as text or an image displayed on a terminal device.

Screen reading software is an application program running on the terminal device. The screen reading software may extract text information in an application program touched by a user on a display interface of the terminal, and convert text into a voice for broadcasting.

Linear touch browsing means that when a finger of the user touches a screen of the terminal to browse, the finger of the user moves without leaving the screen of the terminal, and if text information exists in an area on an interface on which the finger of the user moves, the screen reading software extracts and broadcasts text.

A soft keyboard is an application program on the terminal, and is used by the user to input information. For example, the user may input text information by using the soft keyboard.

The following describes an application scenario and a system architecture of an input method according to embodiments of this application. The terminal in embodiments of this application includes the foregoing examples of the terminal. The following provides descriptions by using an example in which the terminal is a mobile phone.

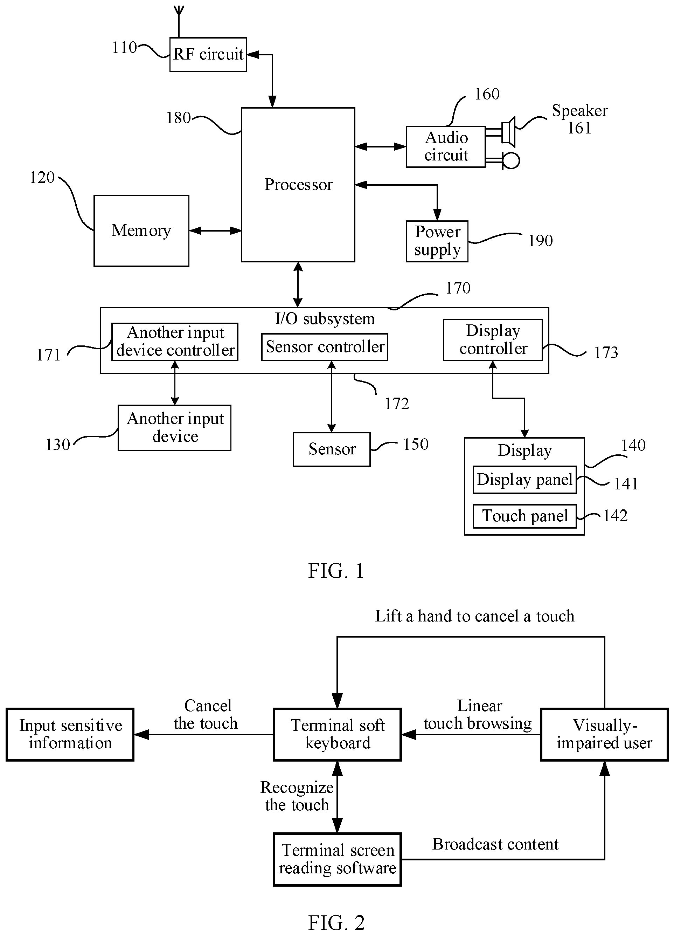

FIG. 1 is a block diagram of a partial structure of a mobile phone 100 according to an embodiment of this application. Refer to FIG. 1. The mobile phone 100 includes components such as a radio frequency (radio frequency, RF) circuit 110, a memory 120, another input device 130, a display 140, a sensor 150, an audio circuit 160, an I/O subsystem 170, a processor 180, and a power supply 190. A person skilled in the art may understand that the structure of the mobile phone shown in FIG. 1 does not constitute a limitation on the mobile phone. The mobile phone may include more or fewer components than those shown in the figure, or combine some components, or split some components, or have different component arrangements. A person skilled in the art may understand that the display 140 belongs to a user interface (user interface, UI), and the mobile phone 100 may include more or fewer user interfaces than those shown in the figure.

The components of the mobile phone 100 are specifically introduced with reference to FIG. 1 below. The RF circuit 110 may be configured to: receive and send information or receive and send a signal in a call procedure; particularly, receive downlink information of a base station and then send the downlink information to the processor 180 for processing; and in addition, send designed uplink data to the base station. Generally, the RF circuit includes but is not limited to an antenna, at least one amplifier, a transceiver, a coupler, a low noise amplifier (low noise amplifier, LNA), a duplexer, and the like. In addition, the RF circuit 110 may further communicate with a network and another device through wireless communication. The wireless communication may use any communication standard or protocol, and includes but is not limited to a global system for mobile communications (global system for mobile communications, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short message service (short message service, SMS), and the like.

The memory 120 may be configured to store a software program and a module. The processor 180 runs the software program and the module stored in the memory 120, to perform various functional applications of the mobile phone 100 and process data. The memory 120 may mainly include a program storage area and a data storage area. The program storage area may store an operating system, an application program required by at least one function (such as a sound play function and an image play function), and the like. The data storage area may store data (such as audio data and a phone book) created when the mobile phone 100 is used, and the like. In addition, the memory 120 may include a high-speed random access memory, or may further include a non-volatile memory, such as at least one magnetic disk storage device, a flash memory device, or another volatile solid-state storage device.

The another input device 130 may be configured to receive input digital or character information, and generate a key signal input that is related to a user setting and function control of the mobile phone 100. Specifically, the another input device 130 may include but is not limited to one or more of a physical keyboard, a functional button (for example, a volume control button or an on/off button), a trackball, a mouse, a joystick, an optical mouse (the optical mouse is a touch-sensitive surface that does not display a visual output, or is an extension of a touch-sensitive surface formed by a touchscreen), and the like. The another input device 130 is connected to another input device controller 171 of the I/O subsystem 170, and performs signal interaction with the processor 180 under control of the another device input controller 171.

The display 140 may be configured to display information input by a user or information provided for the user, and various menus of the mobile phone 100, and may further receive a user input. Specifically, the display 140 may include a display panel 141 and a touch panel 142. The display panel 141 may be configured in a form of a liquid crystal display (liquid crystal display, LCD), an organic light-emitting diode (organic light-emitting diode, OLED), or the like. The touch panel 142 is also referred to as a touchscreen, a touch-sensitive screen, or the like. The touch panel 142 may collect a touch or non-touch operation of the user on or near the touch panel 142 (for example, an operation performed on or near the touch panel 142 by the user by using any appropriate object or accessory such as a finger or a stylus, where the operation may also include a motion sensing operation, and the operation includes operation types such as a single-point control operation and a multi-point control operation), and drive a corresponding connection apparatus based on a preset program. Optionally, the touch panel 142 may include two parts: a touch detection apparatus and a touch controller. The touch detection apparatus detects a touch orientation and posture of the user, detects a signal brought by the touch operation, and transfers the signal to the touch controller. The touch controller receives touch information from the touch detection apparatus, converts the touch information into information that can be processed by the processor, and then sends the information to the processor 180. The touch controller can also receive and execute a command sent by the processor 180. In addition, the touch panel 142 may be implemented by using a plurality of types such as a resistive type, a capacitive type, an infrared type, and a surface acoustic wave type, or the touch panel 142 may be implemented by using any technology developed in the future. Further, the touch panel 142 may cover the display panel 141. The user may perform, based on content displayed on the display panel 141 (the displayed content includes but is not limited to a soft keyboard, a virtual mouse, a virtual button, an icon, and the like), an operation on or near the touch panel 142 covered by the display panel 141. After detecting a touch operation performed on or near the touch panel 142, the touch panel 142 transfers the touch operation to the processor 180 by using the I/O subsystem 170, to determine a touch event type to determine a user input. Then, the processor 180 provides a corresponding visual output on the display panel 141 based on the touch event type and the user input by using the I/O subsystem 170. In FIG. 1, the touch panel 142 and the display panel 141 are used as two independent components to implement input and input functions of the mobile phone 100. However, in some embodiments, the touch panel 142 and the display panel 141 may be integrated to implement the input and output functions of the mobile phone 100.

The mobile phone 100 may further include at least one sensor 150, for example, a light sensor, a motion sensor, and another sensor. Specifically, the light sensor may include an ambient light sensor and a proximity sensor. The ambient light sensor may adjust luminance of the display panel 141 based on brightness of ambient light. The proximity sensor may turn off the display panel 141 and/or backlight when the mobile phone 100 moves to an ear. As a motion sensor, an accelerometer sensor may detect a value of an acceleration in various directions (usually on three axes), may detect a value and a direction of gravity when the accelerometer sensor is still, and may be applied to an application for recognizing a posture of the mobile phone (for example, switching between a landscape mode and a portrait mode, a related game, or magnetometer posture calibration), a function related to vibration recognition (for example, a pedometer or a keystroke), and the like. For the another sensor that may be further configured on the mobile phone 100, for example, a gyroscope, a barometer, a hygrometer, a thermometer, or an infrared sensor, details are not described herein.

The audio circuit 160, a speaker 161, and a microphone 162 may provide an audio interface between the user and the mobile phone 100. The audio circuit 160 may transmit, to the speaker 161, a signal that is converted from received audio data. The speaker 161 converts the signal into a sound signal for output. In addition, the microphone 162 converts a collected sound signal into a signal. The audio circuit 160 receives the signal, converts the signal into audio data, and then outputs the audio data to an RF circuit 108, to send the audio data to, for example, another mobile phone, or outputs the audio data to the memory 120 for further processing.

The I/O subsystem 170 is configured to control an external device for input and output, and may include the another device input controller 171, the sensor controller 172, and the display controller 173. Optionally, one or more another input control device controllers 171 receive a signal from the another input device 130 and/or send a signal to the another input device 130. The another input device 130 may include a physical button (a press button, a rocker button, or the like), a dial, a slider switch, a joystick, a click scroll wheel, and an optical mouse (the optical mouse is a touch-sensitive surface that does not display a visual output, or is an extension of a touch-sensitive surface formed by a touchscreen). It should be noted that the another input control device controller 171 may be connected to any one or more of the foregoing devices. The display controller 173 in the I/O subsystem 170 receives a signal from the display 140 or sends a signal to the display 140. After the display 140 detects a user input, the display controller 173 converts the detected user input into interaction with a user interface object displayed on the display 140, to implement human-machine interaction. The sensor controller 172 may receive a signal from one or more sensors 150 and/or send a signal to the one or more sensors 150.

The processor 180 is a control center of the mobile phone 100, and is connected to each part of the mobile phone through various interfaces and lines. The processor performs various functions of the mobile phone 100 and processes data by running or executing the software program and/or the module stored in the memory 120 and invoking data stored in the memory 120, to perform overall monitoring on the mobile phone. Optionally, the processor 180 may include one or more processing units. Preferably, the processor 180 may integrate an application processor and a modem processor. The application processor mainly processes an operating system, a user interface, an application program, and the like. The modem processor mainly processes wireless communication. It may be understood that the foregoing modem processor may be not integrated into the processor 180.

The mobile phone 100 further includes the power supply 190 (such as a battery) that supplies power to the components. Preferably, the power supply may be logically connected to the processor 180 by using a power management system, to implement functions such as charging management, discharging management, and power consumption management by using the power management system. The mobile phone 100 may further include a camera, a Bluetooth module, and the like, and details are not described herein.

FIG. 2 is a schematic diagram of an application scenario of an input method according to an embodiment of this application.

In FIG. 2, a visually-impaired user performs linear touch browsing when using a terminal, and a finger of the visually-impaired user does not leave a touch panel of the terminal during the linear touch browsing. Screen reading software of the terminal recognizes information browsed by the visually-impaired user through a linear touch, extracts text information from the information, and performs broadcasting via a voice. The visually-impaired user determines, based on content of the broadcasting via a voice, whether content currently browsed through the linear touch is content that the user expects to input.

If the screen reading software of the terminal broadcasts the content that the visually-impaired user expects to input, the visually-impaired user may lift a hand to cancel the linear touch browsing, and the terminal inputs content corresponding to a position at which the finger of the visually-impaired user stays before the visually-impaired user cancels the touch by lifting the hand, but the screen reading software of the terminal does not broadcast the input content again.

Therefore, when the visually-impaired user inputs some sensitive information, because content broadcast by the terminal via a voice is not necessarily content actually input by the visually-impaired user, privacy is improved when the visually-impaired user performs inputting by using the terminal.

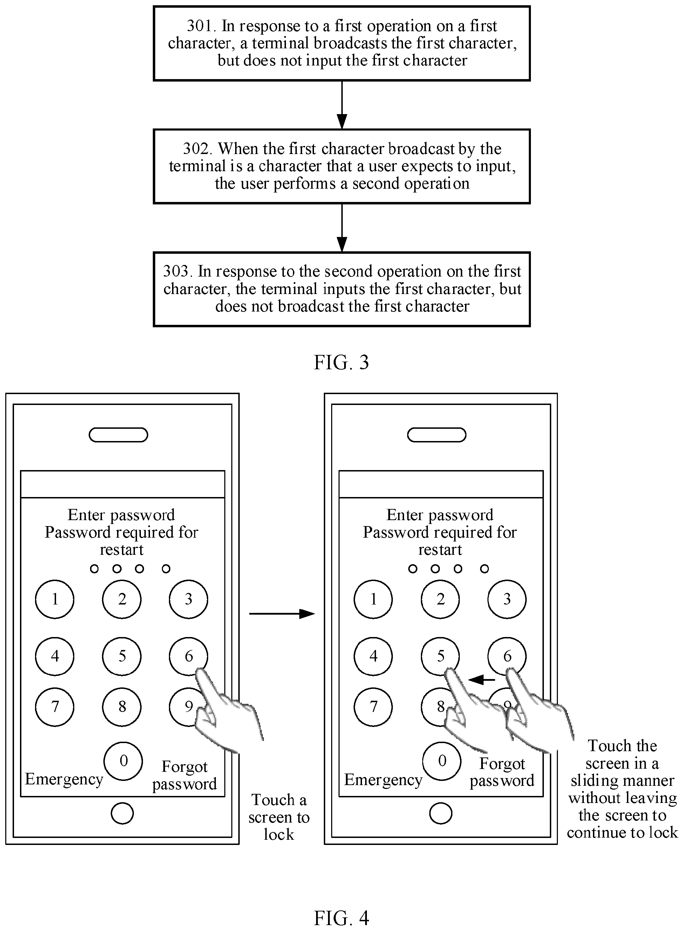

The following describes an input method according to an embodiment of this application with reference to FIG. 3. The input method according to this embodiment of this application includes but is not limited to the following steps.

301. In response to a first operation on a first character, a terminal broadcasts the first character, but does not input the first character.

In this embodiment of this application, when a user performs the first operation on the first character of the terminal, specifically, when the user performs linear touch browsing by using the terminal, screen reading software of the terminal recognizes, in real time, a first character corresponding to an area touched by the user, and extracts the first character for broadcasting via a voice.

Optionally, the terminal may receive the first character by using an application program. For example, the terminal receives the first character by using a soft keyboard, the terminal converts the first character into a first voice by using the screen reading software, and the terminal broadcasts the first voice via a voice.

In a process in which the user performs the linear touch browsing by using the terminal, the terminal only broadcasts the first character, but does not input the first character, where the first character includes a character determined by the user by using the first operation, and specifically, the first character includes information corresponding to a position touched by the user in a display area of the terminal.

Specifically, when the user performs the first operation, the terminal detects that a finger of the user does not leave a touch panel of the terminal in a browsing process. Each time the finger of the user slides to a new touch area, the terminal converts, by using the screen reading software, a character corresponding to the area into a voice, and the terminal broadcasts the voice, but does not input the character.

Refer to FIG. 4. In an example shown in FIG. 4, when a visually-impaired user inputs a password by using a mobile phone, the visually-impaired user uses a terminal in a linear touch browsing manner. Assuming that a character corresponding to an area when a finger of the visually-impaired user just touches a touch panel of the mobile phone is "6", the terminal broadcasts the character "6" via a voice, but does not input the character "6". The visually-impaired user hears that the character "6" broadcast by the terminal via a voice is not a character that the visually-impaired user expects to input, the visually-impaired user continues to perform linear touch browsing.

Specifically, the visually-impaired user slides the finger, and the finger does not leave a screen during the sliding. When the finger of the visually-impaired user slides to a touch area corresponding to a character "5", the terminal broadcasts the character "5" via a voice, and the visually-impaired user determines a next operation based on the broadcasting via a voice.

It may be understood that the first character in this embodiment of this application may be a letter, text, punctuation, or a stroke. This is not specifically limited. The first character may be a character in any area corresponding to the touch panel of the terminal, for example, may be a character on a soft disk, or may be a character on a home interface. This is not specifically limited.

302. When the first character broadcast by the terminal is a character that the user expects to input, the user performs a second operation.

In this embodiment of this application, when the first character broadcast by the terminal via a voice is the character that the user expects to input, the user performs the second operation. The second operation includes a specific user operation. For example, when the user browses by using a linear touch, the second operation includes that the user lifts a hand to cancel a touch.

In this embodiment of this application, the first character broadcast but not input by the terminal includes a character determined by the user by operating the terminal by using the first operation, and the first character input but not broadcast by the terminal includes a character determined by the user by operating the terminal by using the second operation. For example, the first operation includes the linear touch of the user, and the second operation includes that the user lifts the hand to cancel the touch.

303. In response to the second operation on the first character, the terminal inputs the first character, but does not broadcast the first character.

In this embodiment of this application, when the user performs the linear touch browsing on the terminal, and the first character broadcast by the terminal via a voice is the character that the user expects to input, the user lifts the hand to cancel the touch, and the terminal inputs the first character, but does not broadcast the first character via a voice. A character input but not broadcast by the terminal is a character corresponding to a position at which the user stays before the user lifts the hand to cancel the touch.

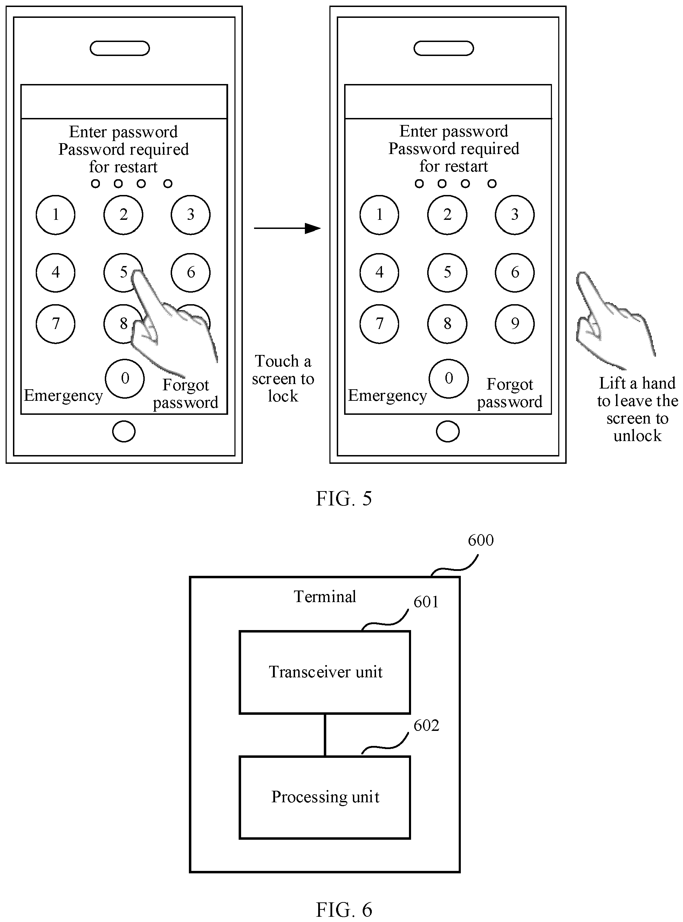

Refer to FIG. 5. In an example shown in FIG. 5, when a visually-impaired user inputs a password by using a mobile phone, the visually-impaired user uses a terminal in a linear touch browsing manner. When a finger of the visually-impaired user slides to a touch area corresponding to a character "5", the terminal broadcasts the character "5" via a voice. If the character "5" is a character that the visually-impaired user expects to input, the visually-impaired user lifts a hand to cancel a touch, and the terminal inputs the character "5", but does not broadcast the character "5" via a voice.

The input method according to this embodiment of this application is not limited to the foregoing linear touch browsing operation, and the first operation and the second operation may be performed in a plurality of operation manners. For example, the visually-impaired user may perform inputting by using a mouse. Specifically, the visually-impaired user moves the mouse to browse, and the terminal broadcasts via a voice, but does not input information corresponding to an area to which the mouse points. When content broadcast by the terminal via a voice is content that the visually-impaired user expects to input, the user clicks or releases a mouse button, and the terminal inputs the content, but does not broadcast the content via a voice.

In this embodiment of this application, when the visually-impaired user inputs some sensitive information, the visually-impaired user keeps touching a character, and all touched characters are read aloud. It is difficult for another person to identify a character finally input by the visually-impaired user. In this way, the visually-impaired user knows a character input by the visually-impaired user, and leakage of input information is prevented, to improve privacy when the visually-impaired user performs inputting.

The foregoing describes the input method according to embodiments of this application, and the following describes an apparatus in embodiments of this application.

Refer to FIG. 6. A terminal 600 according to an embodiment of this application includes a transceiver unit 601 and a processing unit 602. The processing unit 602 is configured to:
in response to a first operation on a first character, broadcast the first character, but not input the first character.

The processing unit 602 is further configured to: in response to a second operation on the first character, input the first character, but not broadcast the first character, where the second operation is a preset operation corresponding to inputting but not broadcasting.

In a possible implementation, the transceiver unit 601 is specifically configured to receive the first character by using a soft keyboard.

The processing unit 602 is specifically configured to:
convert the first character into a first voice by using screen reading software; and
broadcast the first voice by using the screen reading software, but not input the first character.

In a possible implementation, the first character broadcast but not input by the terminal includes a character that is in a display area of the terminal and that is determined by a user by using the first operation. Specifically, the first character broadcast but not input by the terminal includes a character corresponding to a position touched by the user in the display area of the terminal, or the first character broadcast but not input by the terminal includes a character corresponding to a position to which a mouse points when the user performs an operation by using the mouse.

In a possible implementation, the first character input but not broadcast by the terminal includes a character that is in the display area of the terminal and that is determined by the user by using the second operation. Specifically, the first character input but not broadcast by the terminal includes a character corresponding to a position at which the terminal detects that the user cancels a touch in the display area; or the first character input but not broadcast by the terminal includes a character corresponding to a position to which the mouse points when the user operates the mouse to click or lifts a hand to cancel a click.

In a possible implementation, canceling the touch includes that the user lifts the hand to cancel the touch.

In a possible implementation, the first character may be a letter, a stroke, text, or punctuation. This is not specifically limited.

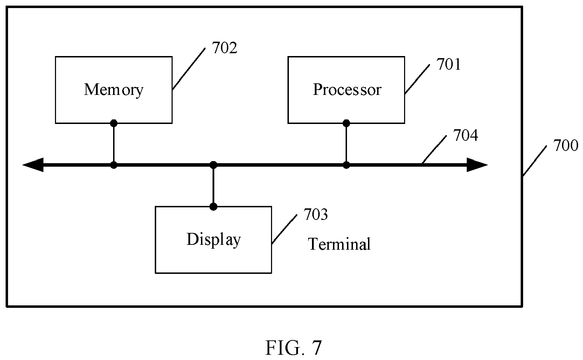

The foregoing describes the terminal in this application from a perspective of functional modules. The following provides descriptions from a perspective of entity hardware. Refer to FIG. 7. An embodiment of a mobile terminal 700 in embodiments of this application includes one or more processors 701, a memory 702, and a display 703.

The terminal 700 further includes a bus 704.

The processor 701, the memory 702, and the display 703 are connected to each other through the bus 704.

The bus 704 may be a peripheral component interconnect (peripheral component interconnect, PCI) bus, an extended industry standard architecture (extended industry standard architecture, EISA) bus, and or the like. The bus may be classified into an address bus, a data bus, a control bus, and the like. For ease of representation, only one bold line is used for representation in FIG. 7, but this does not mean that there is only one bus or only one type of bus.

The processor 701 may be a central processing unit (central processing unit, CPU), a network processor (network processor, NP), or a combination of the CPU and the NP.

The processor 701 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory 702 may include a volatile memory (volatile memory), for example, a random access memory (random access memory, RAM for short). Alternatively, the memory may include a non-volatile memory (non-volatile memory), for example, a flash memory (flash memory), a hard disk drive (hard disk drive, HDD for short), or a solid-state drive (solid-state drive, SSD for short). Alternatively, the memory 702 may include a combination of the foregoing types of memories.

Optionally, the memory 702 is configured to store program instructions, and the processor 701 invokes the program instructions stored in the memory 702, to enable the mobile terminal to perform one or more steps or the optional implementations according to the foregoing embodiments.

An embodiment of this application further provides a computer storage medium. The computer storage medium is configured to store computer software instructions for use by the mobile terminal, and the computer software instructions include a program designed for execution of the mobile terminal.

An embodiment of this application further provides a computer program product. The computer program product includes computer software instructions, and the computer software instructions may be loaded by a processor to implement the procedures in the methods according to the foregoing embodiments.

All or some of the foregoing embodiments may be implemented by using software, hardware, firmware, or any combination thereof. When software is used to implement embodiments, all or some of embodiments may be implemented in a form of a computer program product.

It may be clearly understood by a person skilled in the art that, for the purpose of convenient and brief description, for a detailed working process of the foregoing system, apparatus, and unit, refer to a corresponding process in the foregoing method embodiment, and details are not described herein again.

In some embodiments according to this application, it should be understood that the disclosed system, apparatus, and method may be implemented in another manner. For example, the described apparatus embodiment is merely an example. For example, division into the units is merely logical function division and may be another division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. An input method, comprising:
in response to a first operation on a first character, broadcasting, by a terminal, the first character, but skipping inputting the first character; and
in response to a second operation on the first character, inputting, by the terminal, the first character, but skipping broadcasting the first character, wherein the second operation is a preset operation corresponding to inputting and skipping broadcasting.

2. The method according to claim 1, wherein the broadcasting the first character, but skipping inputting the first character comprises:
receiving, by the terminal, the first character by using a soft keyboard;
converting, by the terminal, the first character into a first voice by using screen reading software; and
broadcasting, by the terminal, the first voice by using the screen reading software, but skipping inputting the first character.

3. The method according to claim 1 or 2, wherein the first operation comprises a linear touch.

4. The method according to claim 1 or 2, wherein the second operation comprises lifting a hand to cancel a touch.

5. A terminal, wherein the terminal comprises:
a processing unit, configured to: in response to a first operation on a first character, broadcast the first character, but skip inputting the first character, wherein
the processing unit is further configured to: in response to a second operation on the first character, input the first character, but skip broadcasting the first character, wherein the second operation is a preset operation corresponding to inputting and skipping broadcasting.

6. The terminal according to claim 5, wherein the terminal further comprises a transceiver unit, and the transceiver unit is configured to receive the first character by using a soft keyboard; and
the processing unit is specifically configured to:
convert the first character into a first voice by using screen reading software; and
broadcast the first voice by using the screen reading software, but skip inputting the first character.

7. The terminal according to claim 5 or 6, wherein the first operation comprises a linear touch.

8. The terminal according to claim 5 or 6, wherein the second operation comprises lifting a hand to cancel a touch.

9. A terminal, comprising:
a processor, a memory, a display, and a bus, wherein
the memory is a transient storage memory or a persistent storage memory; and
the processor is configured to communicate with the memory, and execute an instruction operation in the memory on the terminal, to perform the method according to any one of claims 1 to 4.

10. A computer-readable storage medium, comprising instructions, wherein when the instructions are run on a computer, the computer is enabled to perform the method according to any one of claims 1 to 4.

11. A computer program product, wherein when the computer program product runs on a computer, the computer is enabled to perform the method according to any one of claims 1 to 4.
